Europäisches Patentamt

European Patent Office

Office européen des brevets

(19)

(11) veröffentlichungsnummer: **0 016 403**
**A1**

(12) **EUROPÄISCHE PATENTANMELDUNG**

(21) Anmeldenummer: 80101256.8

(22) Anmeldetag: 12.03.80

(51) Int. Cl.³: **C 08 F 2/22**
**C 08 F 212/08, C 08 F 236/10**
**C 08 F 236/12**

(30) Priorität: 14.03.79 DE 2909949

(43) Veröffentlichungstag der Anmeldung:
01.10.80 Patentblatt 80/20

(84) Benannte Vertragsstaaten:
AT BE CH DE FR GB IT LU NL SE

(71) Anmelder: BASF Aktiengesellschaft
Carl-Bosch-Strasse 38
D-6700 Ludwigshafen(DE)

(72) Erfinder: Aydin, Oral, Dr.
Sophienstrasse 14
D-6800 Mannheim 1(DE)

(72) Erfinder: Distler, Dieter, Dr.
Pfalzring 123
D-6704 Mutterstadt(DE)

(72) Erfinder: Mueller, Alfred, Dr.
Pfadgasse 123
D-6843 Biblis(DE)

(54) Verfahren zur Herstellung von wässrigen Butadien-Copolymerisat-Dispersionen eines Polymerisatgehaltes von mindestens 58 Gew. durch Emulsionscopolymerisation.

(57) Verfahren zur Herstellung von wäßrigen Butadien-Copolymerisat-Dispersionen eines Polymerisatgehaltes von mindestens 58 Gew.% durch Emulsionscopolymerisation von
a) Butadien,
b) Styrol
c) bis 30 Gew.% Acryl- und/oder Methacrylester 4 bis 8 C-Atome enthaltender Alkanole und/oder Acrylnitril und
d) bis 5 Gew.% hydrophile Gruppen aufweisenden monoolefinisch ungesättigten Monomeren
unter Verwendung von Alkalisalzen 10 bis 30 C-Atome enthaltender, höchstens 1 olefinische Doppelbindung aufweisender Carbonsäuren als Emulgatoren nach dem Monomeren-Zulaufverfahren bei üblichen Temperaturen, bei dem man mindestens 80 Gew.% der wäßrigen Phase, die alkalisch reagierende Alkalisalze gelöst enthält, vorlegt, die Monomeren, in denen 0,5 bis 2 Gew.%, bezogen auf die Monomeren der Carbonsäuren gelöst sind, in an sich üblicher Weise nach und nach in die Vorlage gibt und dem Polymerisationsgemisch bei einem Umsatz der Monomeren von 40 bis 80 % weitere Carbonsäuren zusetzt.

EP 0 016 403 A1

BASF Aktiengesellschaft                    O.Z. 0050/033721

Verfahren zur Herstellung von wäßrigen Butadien-Copolymerisat-Dispersionen eines Polymerisatgehaltes von mindestens
58 Gew.% durch Emulsionscopolymerisation

Es ist aus einer Vielzahl von Literaturstellen bekannt, daß man wäßrige Butadien-Copolymerisat-Dispersionen durch Emulsionspolymerisation von Butadien mit Styrol- und/oder Acrylnitril sowie gegebenenfalls zusätzlich Acryl- und/oder Methacrylestern 1 bis 80 C-Atome enthaltende Alkanole sowie gegebenenfalls von geringen Mengen hydrophile Gruppen aufweisenden monoolefinisch ungesättigten Monomeren mit 3 bis 5 C-Atome aufweisenden monoolefinisch ungesättigten Mono- und/oder Dicarbonsäuren und/oder deren gegebenenfalls an den Stickstoffatomen substituierten Amiden herstellen kann. Als Emulgatoren kommen dabei unter anderem Alkalisalze von Fettsäuren, z.B. Kaliumoleat, Kaliumstearat oder Kaliumpalmitat in Frage und man kann dabei beispielsweise nach dem sogenannten Monomeren--Zulaufverfahren oder nach dem Emulsions-Zulaufverfahren arbeiten, wobei Temperaturen von 30 bis 90, insbesondere 50 bis 80°C angewandt werden. Derartige Emulsions-Copolymerisate finden als Synthese-Kautschuk-Latices auf vielen Gebieten Anwendung. Sie fallen jedoch bei ihrer Herstellung durch Emulsionspolymerisation im allgemeinen nur als etwa 40 %ige Dispersionen an. Wenngleich eine derartige Konzentration für viele Einsatzgebiete ausreicht, so ist doch für manche praktische Anwendungen eine höhere

Es hat daher nicht an Versuchen gefehlt, Butadien-Copolymerisat-Dispersionen mit höherem Polymerisat-Gehalt herzustellen. Versucht man aber in üblicher Weise bei erhöhter Konzentration zu polymerisieren, so erhält man meist hochviskose, steife Pasten oder starke Koagulatbildung.

In der Praxis ist man daher im allgemeinen von den in üblicher Weise hergestellten etwa 40 %igen wäßrigen Butadien-Copolymerisat-Dispersionen ausgegangen und hat diese unter Agglomeration der Polymerisat-Teilchen und Abtrennen von Wasser bis zu Polymerisatgehalten von etwa 70 % aufkonzentriert. Als Agglomeriermittel wurden hierbei z.B. Polyalkylenoxide (DE-OS 24 32 983) äthoxyliertes Rizinusöl (DE-AS 11 76 368) oder auch wäßrige Dispersionen besonders hydrophiler Copolymerisate (DE-AS 19 21 976) eingesetzt. Derartige Agglomerierverfahren sind jedoch technisch aufwendig und durch die zugesetzten Agglomeriermittel werden gegebenenfalls die Stabilitätseigenschaften der Dispersionen sowie die Filmeigenschaften daraus hergestellter Filme beeinträchtigt.

Der vorliegenden Erfindung liegt daher die Aufgabe zugrunde, solche wäßrige Butadien-Copolymerisat-Dispersionen unmittelbar durch Emulsionspolymerisation herzustellen, die einen Polymerisatgehalt von mindestens 58 Gew.%, bezogen auf die Dispersion aufweisen und dabei frei fließend sind, d.h. praktisch nicht oder nur sehr wenig erhöhte Viskosität aufweisen.

Es wurde nun gefunden, daß man wäßrige Butadien-Copolymerisat-Dispersionen eines Polymerisat-Gehalts von mindestens, bezogen auf die Dispersion, 58 Gew.% durch Emulsionspolymerisation von (a) 20 bis 80 Gew.% Butadien, (b) 80 bis 20 Gew.% Styrol (c) 0 bis 30 Gew.% Acryl- und/oder Methacrylester 4 bis 8 C-Atome enthaltender Alkanole und/oder Acrylnitril und (d) 0 bis 5 Gew.% hydrophile Gruppen aufweisenden monoolefinisch ungesättigten Monomeren unter Verwendung von Alkalisalzen 10 bis 30 C-Atome enthaltende, höchstens eine olefinische Doppelbindung aufweisende, Carbonsäuren als Emulgatoren nach dem Monomeren-Zulaufverfahren bei üblichen Polymerisations-Temperaturen mit Vorteilen herstellen kann, indem man mindestens 80 Gew.% der wäßrigen Phase, die zur Neutralisation der Carbonsäuren geeignete, alkalisch reagierende Alkalisalze in ausreichender Menge gelöst enthält, vorlegt, die Monomeren, in denen 0,5 bis 2 Gew.%, bezogen auf die Monomeren der Carbonsäuren gelöst sind, in an sich üblicher Weise nach und nach in die Vorlage gibt und dem Polymerisationsgemisch bei einem Umsatz der Monomeren von 40 bis 80 % weitere 0,5 bis 5 Gew.%, bezogen auf die Monomeren der Carbonsäuren zusetzt. Bei dem neuen Verfahren erhält man hochkonzentrierte Butadien-Copolymerisat-Dispersionen, die im allgemeinen frei beweglich sind und die, im Vergleich zu aufkonzentrierten (agglomerierten) Butadien-Copolymerisat-Dispersionen oder selbst etwa 40 %igen in üblicher Weise hergestellten Butadien-Copolymerisat-Dispersionen, keine, bzw. praktisch keine erhöhte Viskosität aufweist.

Bei dem neuen Verfahren kann bei den üblichen Polymerisationstemperaturen von im allgemeinen 30 bis 90, vorzugsweise 50 bis 80°C gearbeitet werden. Als Polymerisationsinitiatoren, die im allgemeinen in der wäßrigen Phase in Mengen von 0,1 bis 2, insbesondere von 0,2 bis 0,6 Gew.% bezogen auf die Monomeren, eingesetzt werden, kommen wasserlösliche Peroxide und Persulfate, wie z.B. Wasserstoffperoxid, Natrium-, Kalium- und Ammoniumpersulfat, oder auch die üblichen Redox-Katalysatoren, z.B. Gemische aus derartigen peroxidischen Katalysatoren und wasserlöslichen Reduktionsmitteln, wie Alkalisalze von Hydrosulfiden, Sulfoxilate und Thiosulfate, sowie Sulfite und Bisulfite unter Zusatz von Schwermetallspuren, z.B. Eisen- oder Kupferionen in Betracht. Bei Verwendung derartiger Redoxkatalysatoren polymerisiert man im allgemeinen bei Temperaturen von 30 bis 50°C, werden dagegen die peroxidischen Katalysatoren ohne Zusatz der Reduktionsmittel als Polymerisationsinitiatoren eingesetzt, so arbeitet man vorzugsweise bei Temperaturen von 50 bis 90,

insbesondere von 65 bis 85°C. Bei dem neuen Verfahren werden vorzugsweise 0,1 bis 2, insbesondere 0,2 bis 1 %, bezogen auf die Monomerenmenge an Reglern der genannten Art eingesetzt.

In manchen Fällen können auch öllösliche radikalbildende Initiatoren, wie Benzoylperoxid, Cumolhydroperoxid und leicht zersetzliche Azoverbindungen, wie Azo-bisisobutyronitril oder Gemische aus wasserlöslichen und öllöslichen Katalysatoren eingesetzt werden.

Zusätzlich können auch übliche Regler, wie Alkylmerkaptane, z.B. Dodecylmerkaptan, sowie Xantogenate, wie Isopropylxantogenat, und ferner übliche Puffersubstanzen mitverwendet werden.

Der Gehalt der Butadien-Copolymerisate an einpolymerisiertem Acrylnitril liegt im allgemeinen unter 30 Gew.%, bezogen auf die Copolymerisate und als (Meth-)acrylsäureester von besonderem Interesse sind Acrylsäure-n-butylester, Acrylsäure-isobutylester, sowie ferner Acrylsäure- und Methacrylsäure-2-äthylhexylester. Als Monomere (d) die hydrophile Gruppen ausweisen, sind ,ß,-olefinisch ungesättigte, 3 bis 4 C-Atome aufweisende Mono- und Dicarbonsäuren, wie vorzugsweise Acrylsäure und Methacrylsäure sowie deren Amide von besonderem Interesse, doch liegt ihr Anteil im allgemeinen unter 3 Gew.%, bezogen auf die gesamten Monomeren. In Anteilen von bis zu 3 Gew.%, bezogen auf die gesamten Monomeren, sind die Methylolamide und Alkoxymethylamide der Acryl- und Methacrylsäure sowie die Acryl- und Methacrylsäuremonoester von 2 bis 6 C-Atome enthaltenden Alkandiolen wie N-Methylolacrylamid, N-Methoxylmethylacrylamid, 1,2--äthylenglykol-monoacrylat, Butandiol-1,4-monoacrylat und -monomethacrylat sowie Hexandiol-1,6-monoacrylat von Interesse. Als monoolefinisch ungesättigte Dicarbonsäure, die gleichfalls als Monomeres (d) in Mengen bis zu etwa 1 Gew.%, bezogen auf die gesamten Monomeren eingesetzt werden kann, sei noch Maleinsäure und Ithaconsäure genannt.

Als 10 bis 30 C-Atome enthaltende, höchstens eine olefinische Doppelbindung aufweisende geradkettige Carbonsäuren, kommen z.B. Laurinsäure, Stearinsäure, Palmitinsäure, Ölsäure und Myristinsäure in Betracht, von denen die Ölsäure im allgemeinen vorgezogen wird. Geeignete alkalisch reagierende Alkalisalze sind insbesondere Kaliumcarbonat und Natriumcarbonat, sowie ferner Kalium- und Natriumhydroxid und Natrium- und Kaliumsilicate.

Derartige alkalisch reagierende Alkalisalze sind gut in Wasser löslich und sollen in der Vorlage in ausreichender Menge enthalten sein um die bei dem Verfahren zugeführten Carbonsäuren unter Bildung von deren Alkalisalzen zu neutralisieren. Ein Überschuß an alkalisch reagierenden Alkalisalzen ist im allgemeinen nicht erforderlich, doch treten bei zu großem Überschuß an alkalisch reagierenden Alkalisalzen bei der Verarbeitung der fertigen Dispersion gegebenenfalls Nachteile auf. Bei dem neuen Verfahren können die insgesamt zur Neutralisation der Carbonsäuren erforderlichen Mengen an alkalisch reagierenden Alkalisalzen in der wäßrigen Phase, die gegebenenfalls zu 100 % vorgelegt werden kann, eingesetzt werden. Man kann aber auch einen Anteil, z.B. die Hälfte der erforderlichen Menge der Alkalisalze in der wäßrigen Vorlage lösen, die z.B. 80 oder 90 % der gesamten wäßrigen Phase betragen kann, und die weiter benötigte Menge an Alkalisalzen gelöst in der restlichen wäßrigen Phase während der Emulsionspolymerisation in das Polymerisationsgemisch eindosieren. Außerdem kann die vorgelegte wäßrige Phase

00164403

geringe Mengen der Carbonsäuren als deren Alkalisalz enthalten und es hat sich in manchen Fällen, insbesondere wenn Styrol als Comonomeres in Mengen über 40 Gew.%, bezogen auf die gesamten Monomeren mitverwendet wird, bewährt, Emulgator-Carbonsäuren der oben genannten Art, bzw. deren Alkalisalze in Mengen von 0,2 bis 0,6 Gew.%, bezogen auf die Monomeren, in der wäßrigen Vorlage einzusetzen. Die Initiatoren können der wäßrigen Vorlage ganz oder teilweise zugesetzt werden.

Das Monomerengemisch, das im allgemeinen 0,5 bis 2, vorzugsweise 1,3 bis 2,0 Gew.% der Carbonsäuren enthält wird der wäßrigen Vorlage in an sich üblicher Weise zugefahren, z.B. kann ein kleiner Teil der Monomerenmischung zunächst bei Raumtemperatur in die Vorlage gegeben werden, die dann auf Polymerisationstemperatur aufgeheizt wird, und man fügt dann das restliche Monomerengemisch nach und nach zu, wobei im allgemeinen kräftig gerührt wird. Die Zugabe der zusätzlichen Carbonsäure in einer Menge von im allgemeinen 0,5 bis 5 Gew.%, insbesondere von 0,5 bis 2 Gew.%, bezogen auf die gesamten Monomeren erfolgt, wenn die gesamten Monomeren zu 40 bis 80, insbesondere zu 40 bis 60 % umgesetzt, d.h. polymerisiert sind. Dabei ist es von besonderem Vorteil, die zusätzliche Carbonsäure-Zugabe nach Zugabe des gesamten Monomeren-Gemisches in das Polymerisationsgemisch vorzunehmen.

Nach Abschluß der Polymerisation können Restmonomere in üblicher Weise durch Entgasen und/oder Strippen mit Wasserdampf abgetrennt werden.

In den folgenden Beispielen werden die wäßrigen Dispersionen durch ihren in üblicher Weise bestimmten Feststoffgehalt (FG), ihre in üblicher Weise gemessene

0016403

Lichtdurchlässigkeit (Ld-Wert, gibt an, wieviel Prozent weißes Licht durch eine 1 cm dicke Schicht einer 0,01 %igen Dispersion auf eine Fotozelle fällt, verglichen mit der Lichtdurchlässigkeit einer 1 cm dicken Schicht destillierten Wassers) und durch ihre Viskosität (gemessen mit einem Rotationsviskosimeter "Rheomat 30" bei einer Schergeschwindigkeit von 399 sec$^{-1}$) angegeben in mPas, charakterisiert.

Die in den folgenden Beispielen angegebenen Teile sind Gewichtsteile.

Beispiele 1 bis 4

In 35 Teilen Wasser werden 0,01 Teile Natriumsalz der Äthylendiamintetraessigsäure, 0,3 Teile Kaliumpersulfat und 2 Teile Kaliumcarbonat gelöst. Zu dieser Lösung gibt man die in der folgenden Tabelle 1 angegebene Menge an Fettsäure ("in Vorlage"). Dabei handelt es sich jeweils, falls nicht anders angegeben, um Ölsäure; soweit Stearinsäure eingesetzt wird, wird sie durch ein S, soweit Myristinsäure eingesetzt wird, wird sie durch ein M, bei den angegebenen Mengen in der Tabelle vermerkt. Zu dieser wäßrigen Vorlage preßt man 1/3 eines Gemisches aus 36 Teilen Butadien, 24 Teilen Styrol, der in Tabelle 1 ("in Zulauf") angegebenen Menge an Fettsäure und 0,3 Teilen Dodecylmerkaptan, und erwärmt unter Rühren auf 75°C. Nach Anspringen der Polymerisation werden aus getrennten Gefäßen der Rest des Monomerengemisches und eine Lösung von 0,2 Teilen Kaliumpersulfat in 6 Teilen Wasser gleichmäßig innerhalb von 4 Stunden zugegeben. Anschließend an die Zugabe der Monomeren wird noch die in Tabelle 1 angegebene Menge an Fettsäure ("Zusatz") zugegeben und bei 75°C auspolymerisieren lassen. Nach dem Abkühlen erhält man wäßrige Butadien-Copolymerisat-Dispersionen, deren eststoffgehalt, Lichtdurchlässigkeit, pH-Wert und Viskosität in der folgenden Tabelle 1 angegeben sind.

Tabelle 1

| Beispiel Nr. | Teile Fettsäure | | | | Dispersion | | | |
|---|---|---|---|---|---|---|---|---|
| | in Vorlage | in Zulauf | Zusatz | bei Umsatz % | FG | LD | $P_H$ | Viskosität in mPas |
| 1 | 0,2 | 2,0 | 1,0 | 55 | 59,0 | 38 | 9,7 | 72 |
| 2 | 0,2 | 2,0 | 1,0 | 80 | 59,0 | 36 | 9,4 | 86 |
| 3 | 0,7 S | 1,3 S | 1,0 | 60 | 59,6 | 44 | 9,3 | 125 |
| 4 | 0,6 M | 1,4 M | 1,0 | 60 | 59,6 | 24 | 9,6 | 145 |

O.Z. 0050/033721

0016403

Die Dispersionen sind z.B. zur Herstellung von geschäumten Teppichrückenbeschichtungen geeignet.

Beispiel 5

In 41 Teilen Wasser werden 0,01 Teile Natriumsalz der Äthylendiamintetraessigsäure, 2 Teile Kaliumcarbonat und 0,3 Teile Ammoniumpersulfat gelöst und dazu 0,4 Teile Ölsäure gegeben. Zu dieser Vorlage fügt man 1/3 des Monomerengemisches bestehend aus 36 Teilen Butadien, 24 Teilen Styrol, 1,4 Teilen Ölsäure und 0,1 Teilen n-Dodecylmerkaptan unter Rühren und setzt die Polymerisation durch Erwärmen auf 75°C in Gang. Nach 15 Minuten Anpolymerisieren preßt man den Rest des Monomerengemisches innerhalb von 2 1/2 Stunden gleichmäßig zu. Anschließend an die Monomerenzugabe wird noch 1 Teil Ölsäure innerhalb von 10 Minuten zugegeben; der Umsatz beträgt dabei 50 bis 60 %. Nach 8 stündiger Gesamtpolymerisationsdauer werden die Restmonomeren durch übliches Strippen mit Wasserdampf entfernt und man erhält nach dem Abkühlen eine Butadien-Copolymerisat-Dispersion eines Feststoffgehaltes von 60,2 %, die einen LD-Wert von 30 %, einen pH-Wert von 9,7 und eine Viskosität von 168 mPas hat. Die Dispersion ist zur Herstellung von Schaumartikeln geeignet.

Beispiel 6

In 35 Teilen Wasser löst man 0,01 Teile Natriumsalz der Äthylendiamintetraessigsäure, 0,3 Teile Natriumpersulfat 2 Teile Natriumcarbonat und 0,6 Teile Ölsäure. Zu dieser wäßrigen Vorlage gibt man unter Rühren 1/3 eines Monomerengemisches aus 66,6 Teilen Butadien, 26,7 Teilen Styrol, 6,7 Teilen Acrylnitril, 1,4 Teilen Ölsäure und 0,2 Teilen Dodecylmerkaptan und heizt auf 75°C auf. Nach 15 Minuten Anpolymerisieren wird der Rest der Monomerenmischung sowie getrennt davon eine Lösung von 0,2 Teilen Natriumpersulfat in 6 Teilen Wasser innerhalb von 4 Stunden
gleichmäßig zugegeben. Anschließend an die Monomerenzugabe
wird innerhalb von 10 Minuten 1 Teil Ölsäure zugegeben,
wobei der Monomerenumsatz etwa 60 % beträgt. Nach dem
Auspolymerisieren und Abtrennen von Restmonomeren durch
übliches Strippen mit Wasserdampf wird eine Butadien-
-Copolymerisat-Dispersion erhalten die einen Feststoffgehalt von 59,1, einen LD-Wert von 38 %, einen pH von
9,4 und eine Viskosität von 235 mPas hat. Die Dispersion
eignet sich zur Herstellung von geformten Gebilden nach
dem Tauchverfahren.

Beispiele 7 bis 11

In 3 Teilen Wasser löst man 0,001 Teile Natriumsalz der
Äthylendiamintetraessigsäure, 0,3 Teile Kaliumpersulfat
und 2 Teile Kaliumcarbonat. In dieser Vorlage gibt man
unter Rühren 1/10 eines Gemisches aus 2 Teilen Ölsäure
und den in Tabelle 2 angegebenen Monomeren sowie Regler
und heizt auf 75°C auf. Nach 30 Minuten Anpolymerisieren
wird der Rest der Monomerenmischung sowie getrennt davon
eine Lösung von 0,2 Teilen Kaliumpersulfat in 1 Teil
Wasser innerhalb von 4 Stunden gleichmäßig zugegeben.
Nach Zulaufende (ca. 60 % Monomerenumsatz) werden innerhalb von 10 Minuten 0,15 Teile Ölsäure zugesetzt. Nach
dem Auspolymerisieren und Abtrennen von Restmonomeren
durch übliches Strippen werden Copolymerisat-Dispersionen
erhalten, deren charakteristische Werte in Tabelle 2
angegeben sind.

Tabelle 2

| Bei-spiel | Monomere in Teilen | | | | | | | Regler | | Dispersion | | |
|---|---|---|---|---|---|---|---|---|---|---|---|---|
| Nr. | Bu | S | AN | n-BA | i-BA | AHA | AS | DMK | PG | LD | pH | Viskosität in mPas |
| 7 | 12,0 | - | 3,0 | - | - | - | - | 0,045 | 58,2 | 34 | 3,4 | 210 |
| 8 | 7,5 | - | 3,0 | 4,5 | - | - | - | - | 62,0 | 46 | 3,0 | 91 |
| 9 | 7,5 | - | 4,5 | - | - | 3,0 | - | 0,015 | 59,3 | 58 | 9,1 | 166 |
| 10 | 7,5 | 1,5 | 4,5 | - | 1,05 | - | 0,015 | - | 58,8 | 33 | 9,1 | 173 |
| 11 | 3,0 | 12,0 | - | - | - | - | - | 0,075 | 63,7 | 29 | 8,7 | 145 |

Beispiel 7 enthält zusätzlich 0,150 Teile Acrylamid in der Vorlage.

Beispiel 8 enthält zusätzlich 0,075 Teile Methacrylamid in der Vorlage.

Beispiel 10 enthält zusätzlich 0,450 Teile N-Methylolmethacrylamid in der Vorlage.

In der Tabelle bedeuten:

| | | | | |
|---|---|---|---|---|
| BU | = Butadien | i-BA | = iso-Butylacrylat |
| S | = Styrol | AHA | = 2-Äthylhexylacrylat |
| n-BA | = n-Butylacrylat | AS | = Acrylsäure |
| | | DMK | = Dodecylmercaptan |

Patentanspruch

Verfahren zur Herstellung von wäßrigen Butadien-Copolymerisat-Dispersionen eines Polymerisatgehaltes von mindestens, bezogen auf die Dispersion, 58 Gew.% durch Emulsionscopolymerisation von

a)    20 bis 80 Gew.% Butadien,

b)    80 bis 20 Gew.% Styrol

c)     0 bis 30 Gew.% Acryl- und/oder Methacrylester
          4 bis  8 C-Atome enthaltender Alkanole
                  und/oder Acrylnitril und

d)     0 bis  5 Gew.% hydrophile Gruppen aufweisenden monoolefinisch ungesättigten Monomeren

unter Verwendung von Alkalisalzen 10 bis 30 C-Atome enthaltender, höchstens 1 olefinische Doppelbindung aufweisender Carbonsäuren als Emulgatoren nach dem Monomeren-Zulaufverfahren bei üblichen Temperaturen, dadurch
gekennzeichnet, daß man mindestens 80 Gew.% der wäßrigen
Phase vorlegt, die zur Neutralisation der Carbonsäuren
geeignete, alkalisch reagierende Alkalisalze in ausreichender Menge gelöst enthält, die Monomeren, in denen
0,5 bis 2 Gew.%, bezogen auf die Monomeren, der Carbonsäuren gelöst sind, in an sich üblicher Weise nach und
nach in die Vorlage gibt und dem Polymerisationsgemisch
bei einem Umsatz der Monomeren von 40 bis 80 % weitere
0,5 bis 5 Gew.%, bezogen auf die Monomeren, der Carbonsäuren zusetzt.

454/78 Wd/ro

**Europäisches Patentamt**

**EUROPÄISCHER RECHERCHENBERICHT**

Nummer der Anmeldung

EP 80 10 1256

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | GB - A - 1 282 406 (NIPPON OIL COMP.)<br><br>* Anspruch 1; Seite 2, Zeilen 39-46 *<br><br>-- | |
| A | GB - A - 318 296 (J.Y. JOHNSON)<br><br>* Anspruch 1; Seite 2, Zeilen 10-60 *<br><br>-- | |
| A | GB - A - 1 412 907 (SUMITOMO NAUGATUCK CO)<br><br>* Anspruch 1 *<br><br>-- | |
| A | US - A - 3 506 604 (H.E. BENJAMIN)<br><br>* Beispiel I *<br><br>---- | |

**KLASSIFIKATION DER ANMELDUNG (Int.Cl. 3)**

C 08 F    2/22
         212/08
         236/10
         236/12

**RECHERCHIERTE SACHGEBIETE (Int. Cl. 3)**

C 08 F    2/22-
         2/26
         236/04
         236/10
         236/12
         212/02-
         212/12

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 18-06-1980 | V. HUMBEECK |

EPA form 1503.1   06.78